# EUROPEAN PATENT APPLICATION

(11) **EP 4 770 101 A1**
(43) Date of publication of application: **01.07.2026**
(21) Application number: 25227787.6
(22) Date of filing: 30.12.2025
(51) Int. Cl.: H04N 21/41, H01R 13/00, H04N 21/418, H04N 21/4363

(54) **INTERACTIVE VIDEO INPUT/OUTPUT SYSTEM AND ITS WIRELESS PROJECTION TRANSMITTER**

(30) Priority: 30.12.2024 TW 113214473 U
(71) Applicant: Nimbletech Digital Inc., New Taipei City 23511 (TW)
(72) Inventor: CHEN, Chih-Yang, New Taipei City (TW)
(74) Representative: HGF

(57) **Abstract**

A wireless projection transmitter includes a housing, a transmission cable, a working circuit assembly, a signal transmission unit, a display screen and a command input interface. The transmission cable is coupled with the housing and extends outwards from a surface of the housing. The working circuit assembly is fixed within the housing and electrically connected to the transmission cable. The signal transmission unit is fixed within the housing and coupled with the working circuit assembly for wirelessly identifying at least one receiver device. The display screen is installed on the housing and coupled with the working circuit assembly for at least displaying a projection option list including the receiver device. The command input interface is located on the housing and electrically connected to the working circuit assembly for selecting the receiver device from the projection option list and at least one operation function.

## Description

### BACKGROUND

### Field of Invention

The present disclosure relates to a signal transmitter. More particularly, the present disclosure relates to a wireless projection transmitter and an interactive video input/output system having the same.

### Description of Related Art

In general, when an audio-visual content of a mobile device (e.g., a laptop, a tablet, or a smartphone) is desired to be projected onto a target device (such as a TV or projector), first, the mobile device and the target device are typically installed with a wireless projection device, respectively so that the wireless projection device installed on the mobile device is able to transmit audio-visual contents to another wireless projection device installed on the target device, and project them onto a screen of the target device.

However, since the wireless projection device can only provide blind sequential selection of user targets available for signal docking, it is unable to quickly and smoothly select the intended user target for transmitting audio-visual contents to the expected target device, thereby providing inconvenience to the user.

Therefore, how to develop a solution to effectively overcome the inconveniences and disadvantages is an urgent and important topic for the industry.

### SUMMARY

The present disclosure is to provide an interactive video input/output system and its wireless projection transmitter to solve the mentioned problems of prior art.

According to one embodiment, a wireless projection transmitter includes a housing, a transmission cable, a working circuit assembly, a signal transmission unit, a display screen and a command input interface. The transmission cable is coupled with the housing and extending outwards from a surface of the housing. The working circuit assembly is fixed within the housing and electrically connected to the transmission cable. The signal transmission unit is fixed within the housing and coupled with the working circuit assembly for wirelessly identifying at least one receiver device. The display screen is installed on the housing and coupled with the working circuit assembly for at least displaying a projection option list including the at least one receiver device. The command input interface is located on the housing and electrically connected to the working circuit assembly for selecting the at least one receiver device from the projection option list and at least one operation function.

According to one or more embodiments of the present disclosure, in the aforementioned wireless projection transmitter, the housing includes a main surface and a side surface that are adjacent to each other, and the side surface is smaller than the main surface. The display screen is located on one of the main surface and the side surface.

According to one or more embodiments of the present disclosure, in the aforementioned wireless projection transmitter, the display screen and the command input interface are respectively located on the same side or different sides of the housing.

According to one or more embodiments of the present disclosure, in the aforementioned wireless projection transmitter, the display screen is fully covered on one main surface of the housing, or the display screen is partially covered on one main surface of the housing.

According to one or more embodiments of the present disclosure, in the aforementioned wireless projection transmitter, the command input interface comprises a touch panel located on the display screen or on one side of the display screen.

According to one or more embodiments of the present disclosure, in the aforementioned wireless projection transmitter, the command input interface is located on one side of the display screen, and the command input interface includes at least one of a trackball, a single-click button and a touchpad.

According to one or more embodiments of the present disclosure, in the aforementioned wireless projection transmitter, the working circuit assembly further includes a wiring board, an image processing unit and a central control unit. The image processing unit is fixed on the wiring board for processing image signals. The central control unit is fixed on the wiring board, and coupled to the image processing unit, the signal transmission unit, the display screen and the command input interface, respectively, and used to control operations of the image processing unit, the signal transmission unit, the display screen, and the command input interface, respectively.

According to one or more embodiments of the present disclosure, in the aforementioned wireless projection transmitter, the housing is formed with a slot, the working circuit assembly is provided with an electrical connection interface located within the housing and facing towards the slot. The transmission cable includes a cable wire, at least one first connector and at least one second connector. The first connector and the second connector are located at two opposite ends of the cable wire, the first connector is pluggably connected to the electrical connection interface of the working circuit assembly, and the second connector is used to be connected to an external device.

According to one or more embodiments of the present disclosure, in the aforementioned wireless projection transmitter, the working circuit assembly is provided with a signal pad located within the housing. The transmission cable includes a cable wire and at least one connector, one end of the cable wire extends into the housing and fixedly soldered to the signal pad, and the at least one connector is located at another end of the cable wire for connecting to an external device.

According to one or more embodiments of the present disclosure, in the aforementioned wireless projection transmitter, the second connector is compatible with one of High Definition Multimedia Interface (HDMI) input/outputs, USB Type-C input/outputs, Alternate Mode in USB Type-C (ALT-mode) input/outputs, Human Interface Device (HID) input/outputs, USB Video Device Class (UVC) input/outputs, USB Audio Class (UAC) input/outputs, and MS System Console (MSC) access.

According to one embodiment, an interactive video input/output system includes a signal source device and the aforementioned wireless projection transmitter. The signal source device includes a main apparatus, an electrical connection port and a display output interface. The display output interface and the electrical connection port are respectively disposed on the main apparatus and electrically connected to the main apparatus, and the display output interface is configured to be connected a display device. The wireless projection transmitter is electrically connected to the electrical connection port with one end of the transmission cable, thereby electrically connecting to the main apparatus. The working circuit assembly is configured to process image signals provided by the main apparatus, and transmit the image signals to the at least one receiver device through the signal transmission unit.

Thus, in the above embodiments, the interactive video input/output system and its wireless projection transmitter of the present disclosure can effectively browse all user targets available for signal docking, and quickly and smoothly selecting the intended user target, thereby significantly enhancing the convenience of use and greatly reducing the difficulties encountered during operation.

The above description is merely used for illustrating the problems to be resolved, the technical methods for resolving the problems and their efficacies, etc. The specific details of the present disclosure will be explained in the embodiments below and related drawings.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain the principles of the present disclosure. In the drawings,
Fig. 1 is a perspective view of a wireless projection transmitter according to one embodiment of the present disclosure.
Fig. 2 is a block diagram of the wireless projection transmitter in Fig. 1.
Fig. 3 is an operational schematic view of an interactive video input/output system according to one embodiment of the present disclosure.
Fig. 4 is a schematic view of the projection option list displayed on the display screen shown in Fig. 3.
Fig. 5A and Fig. 5B are top views of wireless projection transmitters according to one embodiment of the present disclosure.
Fig. 6 is a partial exploded view of a wireless projection transmitter according to one embodiment of the present disclosure.
Fig. 7 is a perspective view of a wireless projection transmitter according to one embodiment of the present disclosure.

### DETAILED DESCRIPTION

Reference will now be made in detail to the present embodiments of the present disclosure, examples of which are illustrated in the accompanying drawings. Wherever possible, the same reference numbers are used in the drawings and the description to refer to the same or like parts. According to the embodiments, it will be apparent to those skilled in the art that various modifications and variations can be made to the structure of the present disclosure without departing from the scope or spirit of the present disclosure.

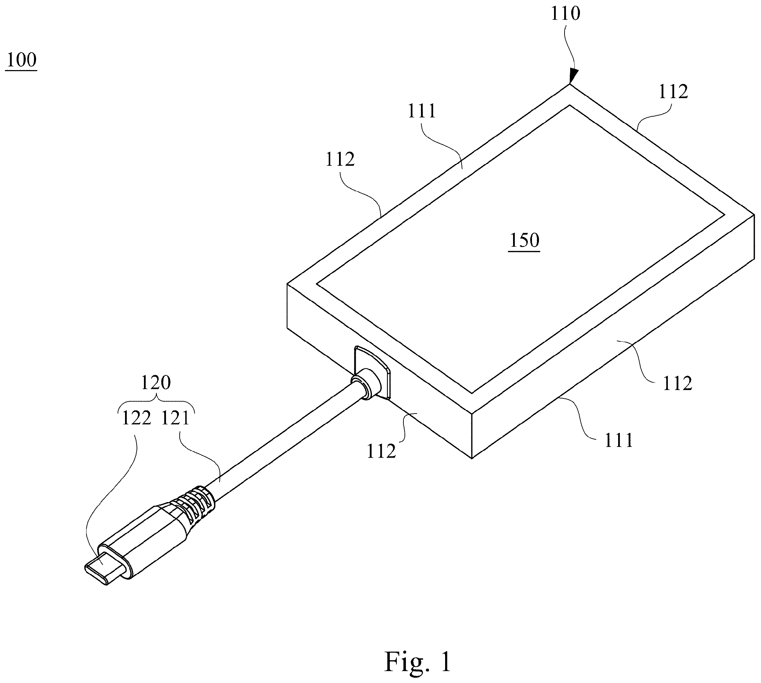

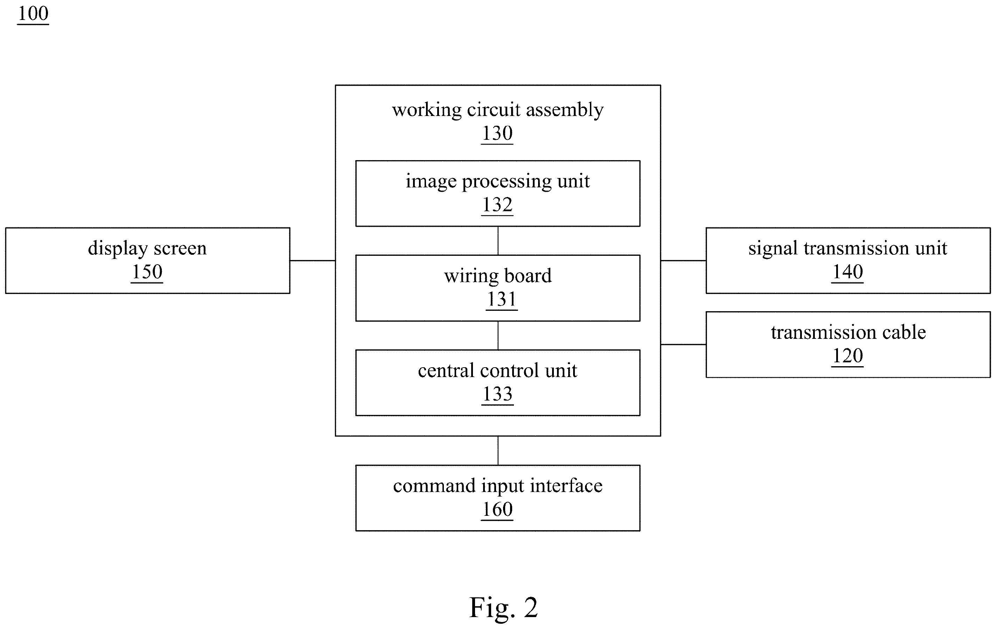

Reference is now made to Fig. 1 to Fig. 2 in which Fig. 1 is a perspective view of a wireless projection transmitter according to one embodiment of the present disclosure. Fig. 2 is a block diagram of the wireless projection transmitter in Fig. 1. The wireless projection transmitter 100 includes a housing 110, a transmission cable 120, a working circuit assembly 130, a signal transmission unit 140, a display screen 150 and a command input interface 160. The working circuit assembly 130 is fixed within the housing 110 and electrically connected to the transmission cable 120. The transmission cable 120 is coupled to one end of the housing 110, and the transmission cable 120 extends outwards from a surface of the housing 110. The signal transmission unit 140 is fixed within the housing 110 and coupled with the working circuit assembly 130 so as to be electrically connected to the working circuit assembly 130. The display screen 150 is installed on the housing 110 and electrically connected to the working circuit assembly 130. The command input interface 160 is located on the housing 110 and electrically connected to the working circuit assembly 130.

In this embodiment, for example, the housing 110 is substantially presented as a cuboid having two main surfaces 111 and a plurality of side surfaces 112. These main surfaces 111 are opposite to each other. Each of the main surfaces 111 is adjacent to these side surfaces 112, and surrounded by these side surfaces 112. Each of these side surfaces 112 is smaller than each of the main surface 111. The display screen 150 is located on one of the main surfaces 111, and in particular, the display screen 150 almost completely covers the main surface 111 of the housing 110. However, the disclosure is not limited thereto, in other embodiments, the display screen 150 may also be configured on one of the side surfaces 112, or simultaneously located on one of the main surfaces 111 and one of the side surfaces 112 adjoined to each other. Furthermore, the present disclosure is not limited to the shape of the housing 110, nor whether the main surfaces and the side surfaces of the housing 110 are flat or curved, respectively.

For example, the command input interface 160 includes a touch panel. The touch panel, which is translucent, overlaps to cover a display area of the display screen 150 such that the touch panel and the display screen 150 together form a known touch screen, that is, the display screen 150 and the command input interface 160 are both located on the same surface of the housing 110. However, the present disclosure is not limited to the form and position of the command input interface 160. In other embodiments, for example, the command input interface 160 may also be located next to the display screen 150, for example, in the form of at least one of a trackball, a single-click button and a touchpad; or, the command input interface 160 and the display screen 150 may be located on different surfaces of the housing 110, respectively.

The working circuit assembly 130 further includes a wiring board 131, an image processing unit 132 and a central control unit 133. The wiring board 131 is fixedly received within the housing 110. The image processing unit 132 is fixedly mounted on the wiring board 131 for processing image signals. The central control unit 133 is fixed on the wiring board 131, and coupled to and electrically connected to the image processing unit 132, the signal transmission unit 140, the display screen 150 and the command input interface 160, respectively for controlling operations of the image processing unit 132, the signal transmission unit 140, the display screen 150, and the command input interface 160, respectively. The image processing unit 132 is, for example, a GPU card or a GPU chip. The central control unit 133 is, for example, a CPU or a single chip.

For example, the transmission cable 120 includes a first cable wire 121 and a connector 122. One end of the first cable wire 121 extends into the housing 110 and is fixedly soldered to a signal pad (not shown in figures) on the wiring board 131. The connector 122 is located at another end of the first cable wire 121 opposite to the housing 110 and pluggably connected to an external device (e.g., a signal source device). The connector 122 is compatible with one of signal formats including High Definition Multimedia Interface (HDMI) input/outputs, USB Type-C input/outputs, Alternate Mode in USB Type-C (ALT-mode) input/outputs, Human Interface Device (HID) input/outputs, USB Video Device Class (UVC) input/outputs, USB Audio Class (UAC) input/outputs, and MS System Console (MSC) access. However, the present disclosure is not limited to the above options.

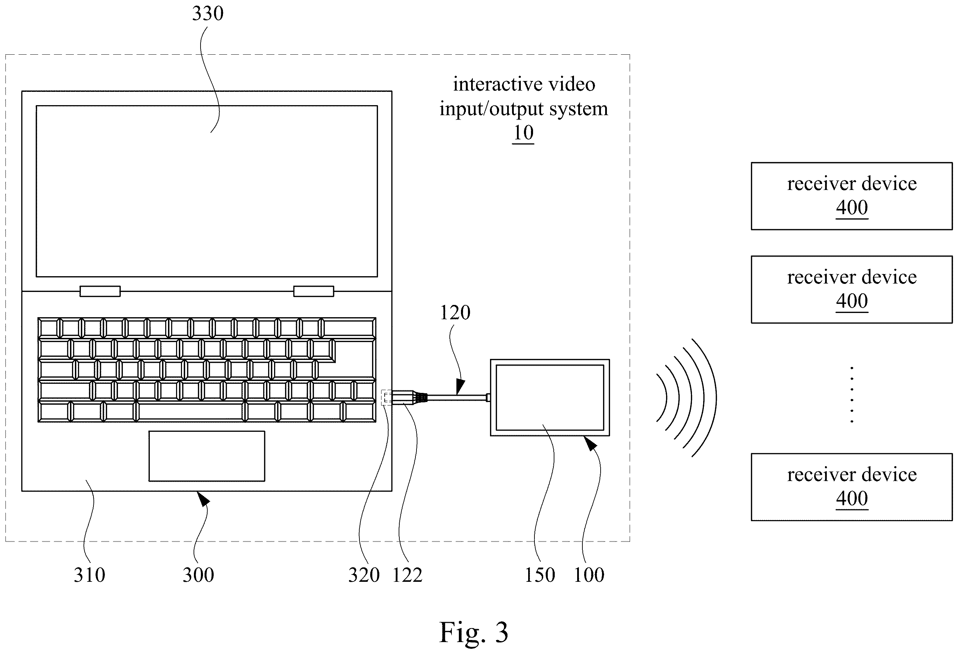

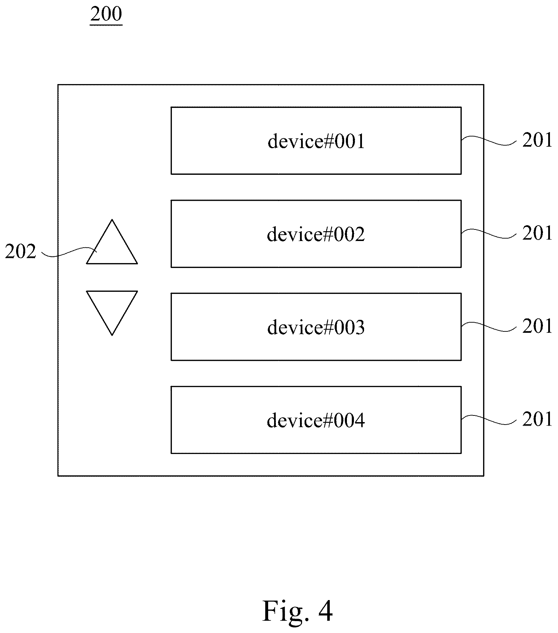

Fig. 3 is an operational schematic view of an interactive video input/output system 10 according to one embodiment of the present disclosure. Fig. 4 is a schematic view of the projection option list 200 displayed on the display screen 150 shown in Fig. 3. As shown in Fig. 2 to Fig. 4, the interactive video input/output system 10 includes a signal source device 300 and the aforementioned wireless projection transmitter 100. The signal source device 300 includes a main apparatus 310, at least one electrical connection port 320 and a display device 330. The display device 330 is electrically connected to the main apparatus 310 for displaying contents from the main apparatus 310. The electrical connection port 320 is arranged on the main apparatus 310 and electrically connected to the main apparatus 310.

Thus, when the connector 122 of the transmission cable 120 is pluggably connected to the electrical connection port 320 of the signal source device 300, the wireless projection transmitter 100 is electrically connected to the main apparatus 310, wherein the wireless projection transmitter 100 is electrically connected to the electrical connection port 320 with one end of the transmission cable, thereby electrically connecting to the main apparatus 310. Next, the signal transmission unit 140 wirelessly identifies one or more receiver devices 400 and sends out signals of one of other operation functions 202 (e.g., up/down direction, adding, deleting, or modifying). The display screen 150 at least displays a projection option list 200 (Fig. 4), and the projection option list 200 showing these receiver devices 400 and their serial numbers 201 for a user to view and select one by one. Therefore, the working circuit assembly 130 processes the image signal provided by the main apparatus 310, and transmits the image signal to the selected receiver device 400 through the signal transmission unit 140.

In this embodiment, the signal transmission unit is a wireless transmission unit (e.g., WIFI or Bluetooth transmission element), which can be wirelessly connected to the signal source device 300 described above. However, the present disclosure is not limited thereto. The signal source device 300 is, for example, a tablet computer, a laptop computer, a desktop computer, a smartphone, or other similar terminal device. However, the present disclosure is not limited thereto. The receiver device 400 is, for example, a television, a projector, or other similar mobile device. However, the present receiver device is not limited thereto.

In addition, when the signal source device 300 is not a computer device, the signal source device 300 is not necessarily equipped with a display device 330, but only a display output interface (not shown in figures). The display output interface is disposed on the main apparatus 310 and electrically connected to the main apparatus 310 for pluggable connection of a display device.

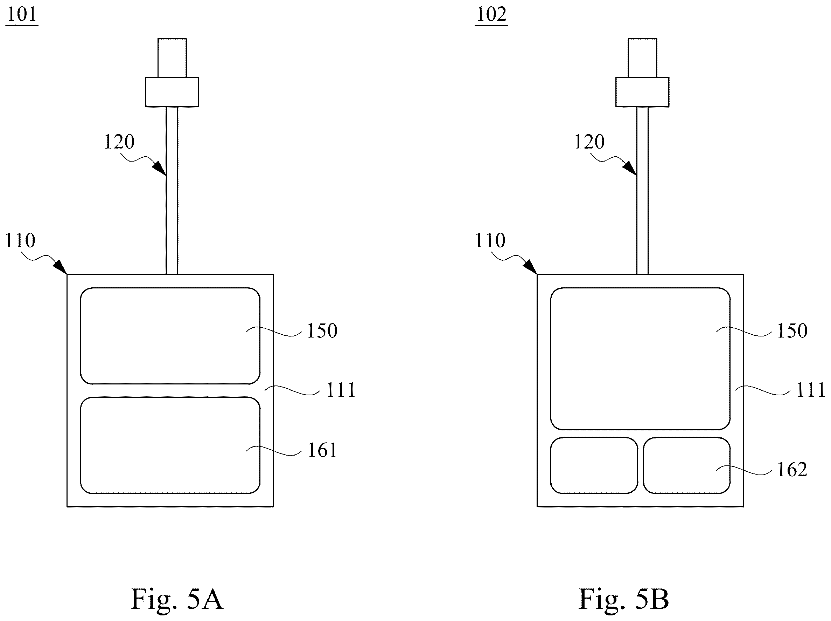

Fig. 5A and Fig. 5B are top views of wireless projection transmitter 101 according to one embodiment of the present disclosure. As shown in Fig. 5A, the wireless projection transmitter 101 of this embodiment is substantially the same with the wireless projection transmitter 100 described above, except that the display screen 150 of the wireless projection transmitter 101 partially covers the main surface 111 of the housing 110, and the command input interface includes a touch panel 161 located on one side of the display screen 150 for the user to use together.

As shown in Fig. 5B, the wireless projection transmitter 102 of this embodiment is substantially the same with the wireless projection transmitter 101 described above, except that the command input interface of the wireless projection transmitter 102 in this embodiment is not a touch panel, but a tap button 162 (or trackball). In this embodiment, two tap buttons 162 are placed side by side at one side of the display screen 150 for the user to use together.

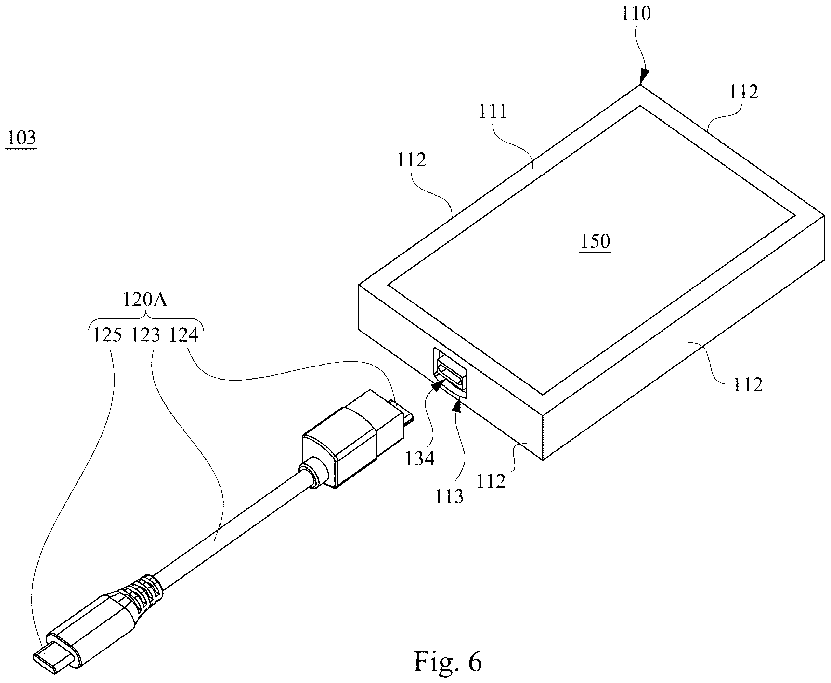

Fig. 6 is a partial exploded view of a wireless projection transmitter 103 according to one embodiment of the present disclosure. As shown in Fig. 6, the wireless projection transmitter 103 of this embodiment is substantially the same with the wireless projection transmitter 100 described above, except that the housing 110 is formed with a slot 113. The working circuit assembly 130 is provided with an electrical connection interface 134 located within the housing 110, fixedly mounted on the wiring board 131, and facing towards the slot 113. The transmission cable 120A includes a second cable wire 123, a first connector 124 and a second connector 125. The first connector 124 and the second connector 125 are located at two opposite ends of the second cable wire 123. The first connector 124 and the electrical connection interface 134 are structurally complementary, and the first connector 124 is pluggably connected to the electrical connection interface 134. The first connector 124 and electrical connection interface 134 are compatible with one of signal formats including USB, mini USB, micro USB, or USB Type-C. The second connector 125 can be connected to the aforementioned signal source device 300. The second connector 125 is compatible with one of signal formats including High Definition Multimedia Interface (HDMI) input/outputs, USB Type-C input/outputs, Alternate Mode in USB Type-C (ALT-mode) input/outputs, Human Interface Device (HID) input/outputs, USB Video Device Class (UVC) input/outputs, USB Audio Class (UAC) input/outputs, and MS System Console (MSC) access.

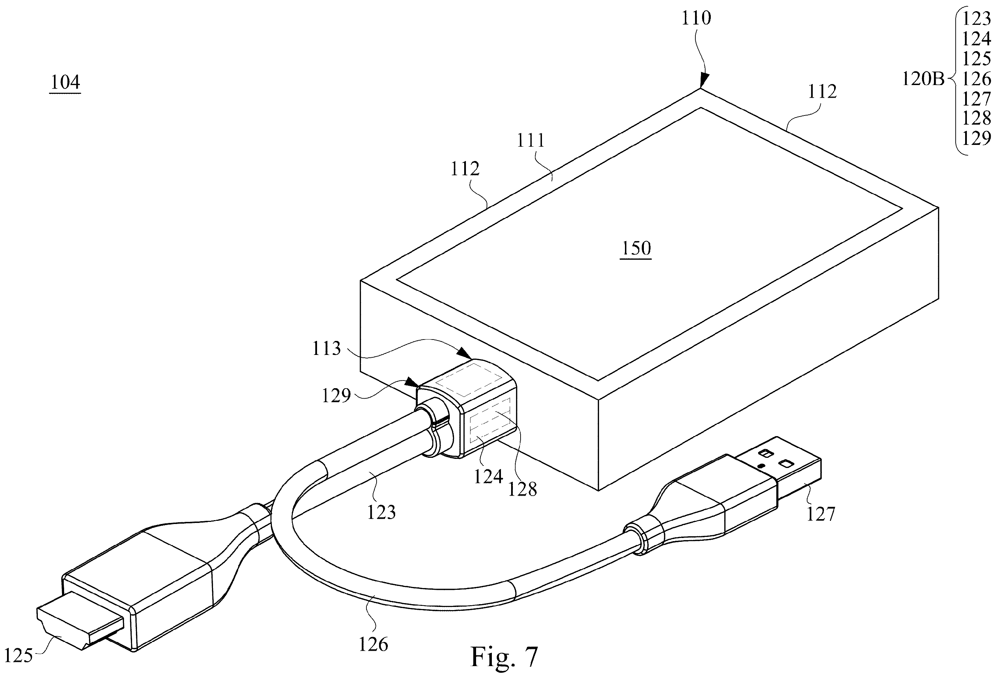

Fig. 7 is a perspective view of a wireless projection transmitter 104 according to one embodiment of the present disclosure. As shown in Fig. 7, the wireless projection transmitter 104 of this embodiment is substantially the same with the wireless projection transmitter 103 described above, except that, other than the second cable wire 123, the first connector 124 and the second connector 125, the transmission cable 120B of the wireless projection transmitter 104 further includes a third cable wire 126, a third connector 127, and a fourth connector 128. The third connector 127 and the fourth connector 128 are respectively located at two opposite ends of the third cable wire 126, and electrically connected to each other through the third cable wire 126. The third connector 127 is used to be connected with an electronic device (not shown in figures) for receiving power signals.

In this embodiment, one end portion of the third cable wire 126 and one end portion of the second cable wire 123 are integrated into the same end portion 129 thereof. The fourth connector 128 and the first connector 124 are collectively received within the same end portion 129 of the transmission cable 120B, and are stacked sequentially in the vertical direction. Furthermore, when the same end portion 129 of the transmission cable 120B inserts into the slot 113 of the housing 110, the fourth connector 128 and the first connector 124 are pluggably connected to the stacked electrical connection interfaces (not shown in figures).

For example, the third connector 127 is a USB-A connector ,and the fourth connector 128 is compatible with one of signal formats including HDMI, mini HDMI, micro HDMI, DisplayPort (DP), mini DP, USB, mini USB, micro USB or USB TYPE-C signal formats; however, the present disclosure is not limited thereto.

Thus, in the above embodiments, the interactive video input/output system and its wireless projection transmitter of the present disclosure can effectively browse all user targets available for signal docking, and quickly and smoothly selecting the intended user target, thereby significantly enhancing the convenience of use and greatly reducing the difficulties encountered during operation.

Finally, the embodiments disclosed above are not intended to limit the present disclosure. Any modifications and refinements made by those skilled in the art without departing from the scope or spirit of the disclosure. Therefore, the scope of protection of this disclosure shall be determined by the appended claims.

## Claims

1. A wireless projection transmitter, comprising:
a housing;
a transmission cable coupled with the housing and extending outwards from a surface of the housing;
a working circuit assembly fixed within the housing and electrically connected to the transmission cable;
a signal transmission unit fixed within the housing and coupled with the working circuit assembly for wirelessly identifying at least one receiver device;
a display screen installed on the housing and coupled with the working circuit assembly for at least displaying a projection option list including the at least one receiver device; and
a command input interface located on the housing and electrically connected to the working circuit assembly for selecting the at least one receiver device from the projection option list and at least one operation function.

2. The wireless projection transmitter of claim 1, wherein the housing comprises a main surface and a side surface that are adjacent to each other, and the side surface is smaller than the main surface, wherein the display screen is located on one of the main surface and the side surface.

3. The wireless projection transmitter of claim 1, wherein the display screen and the command input interface are respectively located on the same side or different sides of the housing.

4. The wireless projection transmitter of claim 1, wherein the display screen is fully covered on one main surface of the housing; or
the display screen is partially covered on one main surface of the housing.

5. The wireless projection transmitter of claim 1, wherein the command input interface comprises a touch panel located on the display screen or on one side of the display screen.

6. The wireless projection transmitter of claim 1, wherein the command input interface is located on one side of the display screen, and the command input interface comprises at least one of a trackball, a single-click button and a touchpad.

7. The wireless projection transmitter of claim 1, wherein the working circuit assembly further comprises:
a wiring board;
an image processing unit fixed on the wiring board for processing image signals; and
a central control unit fixed on the wiring board, and coupled to the image processing unit, the signal transmission unit, the display screen and the command input interface, respectively, and used to control operations of the image processing unit, the signal transmission unit, the display screen, and the command input interface, respectively.

8. The wireless projection transmitter of claim 1, wherein the housing is formed with a slot, the working circuit assembly is provided with an electrical connection interface located within the housing and facing towards the slot; and
the transmission cable comprises a cable wire, at least one first connector and at least one second connector, the at least one first connector and the at least one second connector are located at two opposite ends of the cable wire, the at least one first connector is pluggably connected to the electrical connection interface of the working circuit assembly, and the at least one second connector is used to be connected to an external device.

9. The wireless projection transmitter of claim 8, wherein the at least one second connector is compatible with one of High Definition Multimedia Interface (HDMI) input/outputs, USB Type-C input/outputs, Alternate Mode in USB Type-C (ALT-mode) input/outputs, Human Interface Device (HID) input/outputs, USB Video Device Class (UVC) input/outputs, USB Audio Class (UAC) input/outputs, and MS System Console (MSC) access.

10. The wireless projection transmitter of claim 8, wherein the transmission cable comprises another cable wire, at least one third connector and at least one fourth connector, the at least one third connector and the at least one fourth connector are located at two opposite ends of the another cable wire,
wherein one end portion of the cable wire and one end portion of the another cable wire are integrated into a same end portion, and
the at least one fourth connector and the at least one first connector are collectively received within the same end portion.

11. The wireless projection transmitter of claim 1, wherein the working circuit assembly is provided with a signal pad located within the housing; and
the transmission cable comprises a cable wire and at least one connector, one end of the cable wire extends into the housing and fixedly soldered to the signal pad, and the at least one connector is located at another end of the cable wire for connecting to an external device.

12. The wireless projection transmitter of claim 11, wherein the at least one connector of the transmission cable is compatible with one of High Definition Multimedia Interface (HDMI) input/outputs, USB Type-C input/outputs, Alternate Mode in USB Type-C (ALT-mode) input/outputs, Human Interface Device (HID) input/outputs, USB Video Device Class (UVC) input/outputs, USB Audio Class (UAC) input/outputs, and MS System Console (MSC) access.

13. An interactive video input/output system, comprising:
a signal source device comprising a main apparatus, an electrical connection port and a display output interface, the display output interface and the electrical connection port are respectively disposed on the main apparatus and electrically connected to the main apparatus, and the display output interface configured to be connected a display device; and
the wireless projection transmitter of anyone of claims 1 to 12 electrically connected to the electrical connection port with one end of the transmission cable, thereby electrically connecting to the main apparatus,
wherein the working circuit assembly is configured to process image signals provided by the main apparatus, and transmit the image signals to the at least one receiver device through the signal transmission unit.
